# EUROPÄISCHE PATENTSCHRIFT

(11) **EP 3 135 096 B1**
(45) Veröffentlichungstag und Bekanntmachung des Hinweises auf die Patenterteilung: **26.06.2019**
(21) Anmeldenummer: 16185299.1
(22) Anmeldetag: 23.08.2016
(51) Int. Cl.: A01D 46/28, A01D 75/28

(54) **ERNTEFAHRZEUG ZUM ERNTEN VON FRÜCHTEN, INSBESONDERE ZUR WEINTRAUBENERNTE**
HARVESTER FOR HARVESTING FRUITS, IN PARTICULAR FOR GRAPE HARVESTING
RÉCOLTEUSE DE FRUITS, EN PARTICULIER POUR LES VENDANGES

(30) Priorität: 28.08.2015 DE 102015114418
(43) Veröffentlichungstag der Anmeldung: 01.03.2017
(73) Patentinhaber: ERO-GERÄTEBAU GmbH, 55469 Niederkumbd (DE)
(72) Erfinder: Petry, Willi, 56290 Uhler (DE); Petker, Alexander, 55469 Niederkumbd (DE)
(74) Vertreter: Lemcke, Brommer & Partner Patentanwälte Partnerschaft mbB

(56) Entgegenhaltungen:
- WO-A1-2012/126610
- DE-A1- 3 504 043
- FR-A1- 2 509 114
- FR-A1- 2 537 384
- US-A- 4 557 276
- US-A1- 2009 057 208

## Beschreibung

Die Erfindung betrifft ein Erntefahrzeug zum Ernten von Früchten gemäß Oberbegriff des Anspruchs 1.

Zur vollautomatischen Ernte von Früchten sind Erntefahrzeuge bekannt. Insbesondere für Spalierobst und hier beispielsweise zur Weintraubenlese sind solche Erntefahrzeuge bekannt, welche eine Ernteeinrichtung zum Abtrennen der Früchte von den Pflanzen aufweisen. Typischerweise werden hierbei mittels Vibration und/oder Stoßeinwirkung meist durch vibrierende Bügel die Früchte von den Pflanzen abgetrennt, aufgefangen und in einen Tank oder direkt zu einer Ausgabestelle gefördert.

Mit den Früchten gelangen jedoch auch unerwünschte Fremdkörper in diesen Materialstrom. Dies können Pflanzenblätter, ebenso andere Elemente der Pflanze oder pflanzenfremde Elemente wie beispielsweise Holz sein.

Es ist daher bekannt, bei solchen Erntefahrzeugen einen Früchte-Sortiertisch vorzusehen. Mittels des Sortiertisches werden Früchte separiert, indem über eine Größen- bzw. Formauswahl zumindest solche Elemente, welche in mehreren oder zumindest einer Raumrichtung deutlich von der Größe der Früchte abweichen, abgetrennt werden können. Hierbei finden insbesondere Rollensortiertische Verwendung. Ernteeinrichtung und Früchte-Sortiertisch sind hierbei an dem Erntefahrzeugs angeordnet.

Solch ein Erntefahrzeug ist beispielsweise aus EP 1 755 370 B1 bekannt.

Die WO 2012/126610 A1 offenbart ein Erntefahrzeug für Früchte aus Pergolaanbau mit einer Ernteeinrichtung zum Abtrennen der Früchte sowie einem mittels Hydraulikhebern schwenkbaren Früchte-Sortiertisch, wobei die Förderrichtung des Früchte-Sortiertischs auf waagrechtem Gelände orthogonal zur Schwenkachse verläuft. Beim Ernten von Früchten auf geneigtem Gelände kann es zu einer unerwünschten Anhäufung von geerntetem Material auf einem Teilbereich des Sortiertisches kommen, was sich negativ auf die Sortiergenauigkeit des Früchte-Sortiertisches auswirkt.

Der vorliegenden Erfindung liegt die Aufgabe zugrunde, die Funktionalität des Früchte-Sortiertisches bei Erntefahrzeugen zu verbessern.

Gelöst ist diese Aufgabe durch ein Erntefahrzeug gemäß Anspruch 1. Vorteilhafte Ausgestaltungen des Erntefahrzeugs finden sich in den abhängigen Ansprüchen.

Das erfindungsgemäße Erntefahrzeug zur Weintraubenernte weist eine Ernteeinrichtung zum Abtrennen der Früchte von Pflanzen und einen Früchte-Sortiertisch zum Separieren von Früchten und gegenüber den Früchten größeren Fremdkörpern auf.

Wesentlich ist, dass der Früchte-Sortiertisch schwenkbar an dem Erntefahrzeug angeordnet ist.

Die Erfindung ist in der Erkenntnis begründet, dass Früchte-Sortiertische eine fehlerhafte Funktion aufweisen und/oder einen geringeren Durchsatz aufweisen, wenn der Früchte-Sortiertisch gegenüber einer optimalen Stellung verkippt ist, insbesondere bei einem Verkippen gegenüber einer waagerechten Stellung.

Hier haben Untersuchungen gezeigt, dass durch ungünstige Schrägstellungen eines Früchte-Sortiertisches eine Anhäufung des geernteten Materials in lediglich einem Teilbereich des Sortiertisches erfolgt. Hierdurch kann einerseits der Durchsatz verringert werden, da die Fläche des Sortiertisches nicht optimal ausgenutzt wird. Darüber hinaus können durch Anhäufung des geernteten Materials auf kleinen Flächen des Sortiertisches aufgrund mangelnder Separation Früchte fehlerhafterweise als Fremdkörper aussortiert werden. Ebenso kann ein ungleichmäßiger Materialstrom dazu führen, dass längliche Gegenstände in eine Position gelangen, in welcher sie aufgrund eines geringen Querschnitts mit den Früchten ausgegeben werden, so dass auch hierbei die Funktionalität des Früchte-Sortiertisches beeinträchtigt wird.

Bisher wurden Früchte-Sortiertische derart an einem Erntefahrzeug angeordnet, dass auf einem waagerechten, ebenen Gelände der Früchte-Sortiertisch die optimale Ausrichtung aufweist. Dies ist typischerweise eine waagerechte Ausrichtung einer Sortierfläche des Sortiertisches.

Häufig werden Früchte jedoch auf nicht waagerechtem Gelände angebaut. Dies kann durch eine Bodenneigung aufgrund des Anbaus an einem Hügel oder einem Berg oder durch lokal unebenes Gelände begründet sein.

In diesen Fällen ist das Erntefahrzeug somit nicht waagerecht ausgerichtet und entsprechend weicht die Ausrichtung des Sortiertisches von einer optimalen Ausrichtung ab.

Das Erntefahrzeug weist nun gemäß der vorliegenden Erfindung einen Früchte-Sortiertisch auf, der schwenkbar an dem Erntefahrzeug angeordnet ist. Hierdurch kann somit durch ein Verschwenken des Sortiertisches eine hinsichtlich der Sortierwirkung unvorteilhafte Verkippung aufgrund eines geneigten Geländes ausgeglichen werden. Im optimalen Fall befindet sich der Früchte-Sortiertisch unabhängig von der Geländeform stets in der für die Funktionalität des Sortierens optimalen Ausrichtung, dies ist typischerweise eine horizontale Ausrichtung, d.h. eine waagerechte Ausrichtung einer Sortierebene des Früchte-Sortiertisches.

In anderen Worten ermöglicht die vorliegende Erfindung eine für die Funktionalität des Sortierens optimale Ausrichtung des Sortiertisches während der Bearbeitung (des Sortiervorgangs) während der Fahrt des Erntefahrzeugs beim Erntevorgang. Insbesondere erfolgt bei der vorliegenden Erfindung eine automatisierte Ausrichtung des Sortiertisches in eine für die Funktionalität des Sortierens optimale Ausrichtung des Sortiertisches während der Bearbeitung (des Sortiervorgangs) und insbesondere während der Fahrt des Erntefahrzeugs beim Erntevorgang, die keiner manuellen Einflussnahme durch den Benutzer bedarf.

Es liegt im Rahmen der Erfindung, dass der Früchte-Sortiertisch um einen oder mehrere Punkte und/oder um eine oder mehrere Achsen schwenkbar an dem Erntefahrzeug angeordnet ist. Insbesondere liegt es im Rahmen der Erfindung, dass der Sortiertisch um genau einen Schwenkpunkt schwenkbar oder bevorzugt um genau eine Schwenkachse schwenkbar am dem Erntefahrzeug angeordnet ist.

Erntefahrzeuge finden typischerweise zum Ernten von Früchten in Spalieranbauweise, insbesondere zur Ernte von Weintrauben von Weinrebenzeilen Anwendung. Da die Pflanzen an sich typischerweise auch bei geneigtem Gelände lotrecht wachsen, weist ein Erntefahrzeug typischerweise während des Erntevorgangs lediglich eine Neigung um eine Achse senkrecht zur Fahrtrichtung bei Geradeausfahrt auf. Eine seitliche Neigung, d. h. eine Neigung um eine Achse parallel zur Fahrtrichtung bei Geradeausfahrt tritt demgegenüber erheblich seltener auf. Vorzugsweise weist das Erntefahrzeug daher Ausgleicheinheiten, insbesondere ausfahrbare Elemente zwischen einem Fahrzeugrahmen des Erntefahrzeugs und den Rädern des Erntefahrzeugs, auf, so dass mittels der Ausgleicheinheiten eine seitliche Neigung des Geländes, d.h. eine Neigung um eine Achse in etwa in Fahrtrichtung bei Geradeausfahrt ausgeglichen werden kann.

Vorteilhafterweise ist der Früchte-Sortiertisch in konstruktiv einfacher Weise um zumindest eine Schwenkachse schwenkbar an dem Erntefahrzeug angeordnet. Eine besonders vorteilhaft konstruktiv einfache Ausgestaltung ergibt sich, indem der Früchte-Sortiertisch in besonders konstruktiv einfacher Weise um genau eine Schwenkachse schwenkbar an dem Erntefahrzeugs angeordnet ist.

Hierbei ist es insbesondere vorteilhaft, dass der Früchte-Sortiertisch um eine Schwenkachse schwenkbar an dem Erntefahrzeug angeordnet ist, welche Schwenkachse einen Winkel im Bereich 70° bis 110°, insbesondere 80° bis 100°, bevorzugt 90° mit einer Fahrtrichtung des Erntefahrzeugs bei Geradausfahrt einschließt, da wie zuvor ausgeführt, eine seitliche Neigung des Erntefahrzeugs typischerweise nicht oder nur in geringem Maße vorliegt. Insbesondere vorteilhaft ist es somit, wenn die Schwenkachse senkrecht zu der Fahrtrichtung des Erntefahrzeugs bei Geradeausfahrt steht.

Alternativ oder insbesondere zusätzlich ist es vorteilhaft, wenn die Schwenkachse bei auf einer waagerechten Ebene stehenden Erntefahrzeug mit einer waagerechten Ebene einen Winkel kleiner 30°, bevorzugt kleiner 15°, insbesondere bevorzugt kleiner 5° einschließt, um eine horizontale Ausrichtung des Früchte-Sortiertisches zu ermöglichen. Insbesondere ist es vorteilhaft, dass die Schwenkachse bei auf einer waagerechten Ebene stehendem Erntefahrzeug waagerecht angeordnet ist.

Der Früchte-Sortiertisch ist vorzugsweise zum Fördern des zu sortierenden Früchte/Fremdkörper-Gemischs in einer Förderrichtung ausgebildet. Hierbei ist der Früchte-Sortiertisch um eine parallel zu der Förderrichtung liegende Schwenkachse schwenkbar an dem Erntefahrzeug angeordnet. Dies ist darin begründet, dass die eingangs beschriebenen Nachteile und Fehler insbesondere dann auftreten, wenn in Förderrichtung eine Häufung des Materialstroms an einer Seite aufgrund einer entsprechenden Neigung des Fördertisches auftritt. Mit einer parallel zu der Förderrichtung liegenden Schwenkachse kann somit der Früchte-Sortiertisch zumindest senkrecht zu der Förderrichtung optimal ausgerichtet werden, so dass die zuvor beschriebene nachteilige Häufung des Materialstroms unterbleibt.

Typischerweise ist wie zuvor beschrieben die optimale Ausrichtung des Früchte-Sortiertisches eine waagerechte Ausrichtung. Vorteilhafterweise wird daher der Früchte-Sortiertisch um die parallel zu der Förderrichtung liegende Schwenkachse derart verschwenkt, dass der Früchte-Sortiertisch zumindest senkrecht zu der Förderrichtung waagerecht, (d. h. horizontal) ausgerichtet ist, insbesondere eine Sortierebene des Früchte-Sortiertisches zumindest senkrecht zu der Förderrichtung waagerecht, (d. h. horizontal) ausgerichtet ist.

Es liegt im Rahmen der Erfindung, dass das Erntefahrzeug aktive Mittel zum Verschwenken des Früchte-Sortiertisches aufweist. Solche aktiven Mittel können hydraulische Kolben, elektrische Kolben oder andere motorische Antriebe sein. In dieser Ausführungsform weist das Erntefahrzeug weiterhin eine Messeinheit zur Neigungsmessung und eine entsprechende Regelungseinheit auf, um mittels der motorischen Mittel den Früchte-Sortiertisch durch Verschwenken optimal auszurichten, d. h. typischerweise zumindest senkrecht zur Schwenkachse horizontal auszurichten.

Besonders vorteilig ist es jedoch, den Früchte-Sortiertisch derart schwenkbar zu an dem Erntefahrzeug anzuordnen, dass ein passives Verschwenken erfolgt, d. h. ein Verschwenken ohne motorische Mittel. Hierbei wird in konstruktiv einfacher Weise der Früchte-Sortiertisch derart ausgebildet, dass ein passives Schwenken mittels Gewichtskraft erfolgt, vorteilhafterweise erfolgt eine horizontale Ausrichtung des Früchte-Sortiertisches zumindest hinsichtlich des Schwenkpunktes oder der Schwenkachse durch passives Verschwenken.

Eine vorteilhaft einfache Ausgestaltung ergibt sich, indem ein Schwenkpunkt oder bevorzugt eine Schwenkachse des Früchte-Sortiertisches über dem Schwerpunkt des Früchte-Sortiertisches, bevorzugt über dem Früchte-Sortiertisch angeordnet ist. Durch die Gewichtskraft pendelt sich in dieser vorteilhaften Ausführungsform somit der Früchte-Sortiertisch bei einer sich ändernden Neigung des Erntefahrzeugs ohne die Notwendigkeit des Vorsehens motorischer Mittel in der optimalen Ausrichtung ein. Insbesondere ist es somit vorteilhaft, dass sich bei optimaler Ausrichtung des Früchte-Sortiertisches, insbesondere bei waagerechter Ausrichtung, der Schwerpunkt lotrecht unterhalb des Schwenkpunktes oder der Schwenkachse befindet.

Der Sortiertisch ist vorteilhafterweise in an sich bekannter Weise ausgeführt, so dass die Früchte durch den Sortiertisch hindurchfallen, wohingegen Fremdkörper, welche zumindest in einer Raumrichtung größer als die Früchte sind, in einer Transportrichtung über den Transporttisch gefördert und an einem Ausgabeende des Sortiertisches ausgegeben werden. Dies trifft somit auch auf längliche Gegenstände, wie beispielsweise Blattstiele zu, sofern diese sich nicht in einer ungünstigen Positionierung befinden, in welcher sie senkrecht oder sehr schräg zu der Sortierebene des Sortiertisches stehen. Aufgrund der vorteilhaften Ausrichtung des Sortiertisches durch das Verschwenken ist eine Häufung von Materialstrom an einer Seite des Sortiertisches jedoch ausgeschlossen oder zumindest erheblich verringert, so dass auch solche ungünstige Positionierungen länglicher Pflanzenelemente vermieden oder zumindest erheblich verringert werden.

Vorzugsweise weist das Erntefahrzeug ein Früchte-Auffangelement, insbesondere eine Früchte-Auffangwanne auf. Das Früchte-Auffangelement ist bevorzugt an dem Sortiertisch und gemeinsam mit diesem schwenkbar an dem Erntefahrzeug angeordnet.

Mittels des Früchte-Auffangelementes werden somit die durch den Sortiertisch hindurchfallenden Früchte aufgefangen, wobei die relative Positionierung zwischen Früchte-Sortiertisch und Früchte-Auffangelement stets gleichbleibt, da das Früchte-Auffangelement gemeinsam mit dem Sortiertisch schwenkbar an dem Sortiertisch angeordnet ist.

Das Früchte-Auffangelement ist somit vorzugsweise unterhalb des Sortiertisches an dem Sortiertisch angeordnet.

Zur weiteren Förderung der mittels des Sortiertischs sortierten Früchte weist das Erntefahrzeug vorzugsweise ein Früchte-Fördermittel auf, um Früchte aus dem Früchteauffangelement zu fördern. Hierbei ist das Früchte-Fördermittel bevorzugt an dem Früchte-Auffangelement angeordnet. In dieser bevorzugten Ausführungsform sind somit Früchtesortiertisch, Früchte-Auffangelement und Früchte-Fördermittel gemeinsam schwenkbar an dem Erntefahrzeug angeordnet. Hierdurch ist somit auch eine optimale Funktionalität des Früchte-Fördermittels aufgrund der optimierten Ausrichtung durch Verschwenken gewährleistet.

Das Fördermittel ist hierbei bevorzugt derart ausgebildet, dass die Früchte aus dem Früchte-Auffangelement zumindest mit einer Richtungskomponente in Richtung der Schwenkachse gefördert werden. Durch das Fördern der Früchte mit einer Richtungskomponente in Richtung der Schwenkachse aus dem Früchteauffangelement gelangen die Früchte somit mittels des Fördermittels näher zu der Schwenkachse. Hierdurch ergibt sich ein Vorteil für die weitere Übergabe der Früchte von dem Früchte-Fördermittel zu dem nächsten Element im Materialstrom, beispielsweise eines Speichertanks für die Früchte:
Elemente, welche exakt an der Schwenkachse angeordnet sind, ändern ihre Position relativ zu dem Erntefahrzeug bei einem Verschwenken des Früchte-Sortiertisches nicht, sondern führen lediglich eine Drehung durch. Je näher der Ausgabepunkt des Fördermittels an der Schwenkachse liegt, umso geringer ist die räumliche Differenz des Ausgabepunktes des Früchte-Fördermittels bei unterschiedlichen Schwenkstellungen des Früchte-Sortiertisches. Im besonders vorteilhaften Idealfall werden die Früchte mittels des Früchte-Fördermittels an einem Ausgabepunkt ausgegeben, welcher auf der Schwenkachse liegt, so dass unabhängig von der Schwenkstellung der Ausgabeort seine räumliche Position gegenüber dem Erntefahrzeug nicht ändert und somit eine unabhängig von der Neigung des Erntefahrzeugs genau definierte Ausgabeposition der Früchte durch das Früchte-Fördermittel gegeben ist.

Vorzugsweise weist das Erntefahrzeung eine Entrappeinrichtung zum Abtrennen der Früchte von Pflanzenresten auf. Die Entrappeinrichtung ist mittelbar oder unmittelbar an dem Erntefahrzeug angeordnet. Weiterhin ist der Früchte-Sortiertisch hinsichtlich des Transports der Früchte der Entrappeinrichtung nachgeordnet.

Im Materialstrom werden somit zunächst die Früchte mittels der Entrappeinrichtung von Pflanzenresten abgetrennt, insbesondere bei der Weinlese die Beeren von den Rappen getrennt; anschließend erfolgt ein weiteres Separieren der Beeren von Fremdkörpern durch den Früchte-Sortiertisch.

Hierdurch wird das nachgelagerte Trennen der Früchte von Pflanzenresten eingespart und darüber hinaus ist weniger Speicherkapazität notwendig, da die mittels der Entrappeinrichtung abgetrennten Pflanzenreste direkt ausgeworfen werden können.

Typische Entrappeinrichtungen sind zumindest in einer Raumrichtung unanfällig gegenüber Neigungen des Erntefahrzeugs. Dies kann beispielsweise darin begründet sein, dass die Entrappeinrichtung als einen wesentlichen Bestandteil eine Lochtrommel aufweist, wobei die Beeren durch die Löcher der Lochtrommel hindurchgeführt werden und mittels eines Abstreifelements die Pflanzenreste innerhalb der Lochtrommel abgestreift werden. In solchen oder vergleichbaren Ausführungsformen ist somit eine Neigung des Erntefahrzeugs um eine Achse, welche parallel zu einer Drehachse der Lochtrommel ist, ohne oder nur mit geringer Auswirkung auf die Funktion der Entrappeinrichtung.

Zur Erhöhung der Stabilität des Erntefahrzeugs und/oder zur konstruktiv einfachen Ausgestaltung, in dem die Masse der Entrappeinrichtung nicht schwenkbar gelagert werden muss, ist daher folgende Ausgestaltung vorteilhaft: Vorzugsweise ist der Früchte-Sortiertisch daher relativ zu der Entrappeinrichtung schwenkbar angeordnet. Insbesondere ist es konstruktiv vorteilhaft, dass die Schwenkachse zwischen Entrappeinrichtung und Früchte-Sortiertisch liegt.

Wie zuvor beschrieben, ist eine Entrappeinrichtung mit einer drehbaren Lochtrommel unanfällig gegenüber Neigung des Erntefahrzeugs um eine Achse, welche parallel zur Drehachse der Lochtrommel ist. Vorzugsweise ist daher die Schwenkachse parallel zu einer Drehachse der Lochtrommel angeordnet. Insbesondere ist es somit vorteilhaft, dass die Drehachse der drehbaren Lochtrommel und die Schwenkachse des Früchte-Sortiertisches jeweils senkrecht zu der Fahrrichtung des Erntefahrzeugs bei Geradeausfahrt angeordnet sind.

Um die Wartungsmöglichkeiten zu verbessern, ist es vorteilhaft, dass Entrappeinrichtung und Sortiertisch als Einheit ausgebildet sind, wobei diese Einheit wahlweise lösbar von dem Erntefahrzeug ausgebildet ist. Hierdurch kann zu Wartungszwecken in einfacher Weise Entrappeinrichtung und Sortiertisch von dem Erntefahrzeug entfernt werden.

Der Früchte-Sortiertisch kann in an sich bekannter Weise ausgebildet sein. Insbesondere ergibt sich eine konstruktiv einfache und hinsichtlich der Sortierwirkung effiziente Ausgestaltung, indem der Früchte-Sortiertisch als Rollensortiertisch mit mehreren parallel angeordneten Rollen ausgebildet ist. Vorzugsweise weisen die Rollen in an sich bekannter Weise periodisch zu- und abnehmende Durchmesser auf, so dass Einbuchtungen entstehen, die im Zusammenspiel mit den Einbuchtungen benachbarter Rollen Öffnungen bilden, welche somit die Größe von hindurchfallenden Objekten definieren. Auf diese Weise können die Öffnungen derart gewählt werden, dass die gewünschten Früchte, nicht jedoch gegenüber diesen Früchten größere Fremdkörper durch die Rollenebene, welche somit die Sortierebene des Sortiertisches ist, hindurchfallen. Vorzugsweise ist hierbei die Schwenkachse senkrecht zu den Drehachsen der Rollen angeordnet.

Der Begriff "Drehachse", "Schwenkachse" wird hier stets im Rahmen dieser Anmeldung in seiner mathematischen Definition, d. h. der mathematischen Linie, welche die Dreh- oder Schwenkachse definiert, verwendet. Sofern nichts anderes angegeben ist, bezeichnet eine Drehachse/Schwenkachse somit nicht zwingend ein gegenständliches Element. Dies trifft ebenso auf die Begriffe "Schwenkpunkt", "Drehpunkt" zu, welche lediglich einen mathematischen Punkt definieren, um welchen das Schwenken/die Drehung erfolgt.

Das Erntefahrzeug weist vorzugsweise einen Fahrzeugrahmen mit einer das Erntefahrzeug in Fahrtrichtung durchdringenden Aussparung auf, so dass zum Ernten mit dem Erntefahrzeug über eine Pflanzenzeile hinweggefahren werden kann und sich der Fahrzeugrahmen somit in der Grundform eines auf dem Kopf stehenden U in Fahrtrichtung seitlich rechts und links der Pflanzenzeile bis zu dem Bodenbereich erstreckt, wo entsprechend Räder des Erntefahrzeugs angeordnet sind.

Das Erntefahrzeug weist vorzugsweise weitere, an sich bekannte Komponenten auf, insbesondere eine oder mehrere der folgenden Komponenten: Räder und einen oder mehrere motorische Antrieb für die Räder, Fördereinrichtungen für das Erntegut, Steuereinheiten zum Steuern des Fahrbetriebs und der Erntefunktionen sowie Erntegutverarbeitungsfunktionen, eine Fahrerkabine, ein Aggregat, insbesondere ein Hydraulikaggregat, zum Betreiben von Einheiten des Erntefahrzeugs, insbesondere der Ernteeinrichtung, des Fürchte-Sortiertisches, eines Entrappers und/oder der vorgenannten Fördereinrichtungen. Vorzugsweise weist das Erntefahrzeug einen Fahrzeugrahmen auf, an welchem die vorgenannten Komponenten angeordnet sind, insbesondere ist der Sortiertisch vorzugsweise schwenkbar mittelbar oder unmittelbar an dem Fahrzeugrahmen angeordnet.

Der Schwenkwinkel, um welchen der Sortiertisch relativ zu dem Erntefahrzeug verschwenkbar ist, entspricht vorteilhafterweise zumindest dem größten Geländewinkel, in welchem Gelände das Erntefahrzeug arbeiten kann. Der Früchte-Sortiertisch ist vorteilhafterweise derart schwenkbar angeordnet, dass gegenüber einer Normalstellung bei auf einer waagerechten Ebene stehendem Erntefahrzeug der Früchte-Sortiertisch in zwei entgegengesetzten Schwenkrichtungen um mindestens 15°, insbesondere mindestens 30°, bevorzugt zumindest 45° schwenkbar ist.

Weitere Ausführungsformen und bevorzugte Merkmale werden im Folgenden anhand von Ausführungsbeispielen und den Figuren beschrieben. Dabei zeigt:
- Figur 1: ein Ausführungsbeispiel eines erfindungsgemäßen Erntefahrzeugs in Ansicht von hinten;
- Figur 2: das Erntefahrzeug in Seitenansicht auf waagerechtem Gelände;
- Figur 3: das Erntefahrzeug in Seitenansicht bei Bergauffahrt;
- Figur 4: das Erntefahrzeug in Seitenansicht bei Bergabfahrt;
- Figur 5: das Erntefahrzeug in Draufsicht von oben;
- Figur 6: eine herausnehmbare Einheit des Erntefahrzeugs umfassend einen Entrapper und den Früchte-Sortiertisch in perspektivischer Darstellung;
- Figur 7: die Einheit aus Figur 6 in dem Betriebszustand gemäß Figur 2;
- Figur 8: die Einheit aus Figur 6 in dem Betriebszustand gemäß Figur 4;
- Figur 9: die Einheit aus Figur 6 in dem Betriebszustand gemäß Figur 3;
- Figur 10: einen Querschnitt durch die Einheit gemäß Figur 6 und
- Figur 11: einen weiteren Querschnitt durch die Einheit gemäß Figur 6, wobei der Querschnitt entlang der Linie B-B in Figur 10 und senkrecht zur Zeichenebene in Figur 10 ausgeführt ist.

Gleiche Bezugszeichen in den Figuren bezeichnen gleiche oder gleichwirkende Elemente.

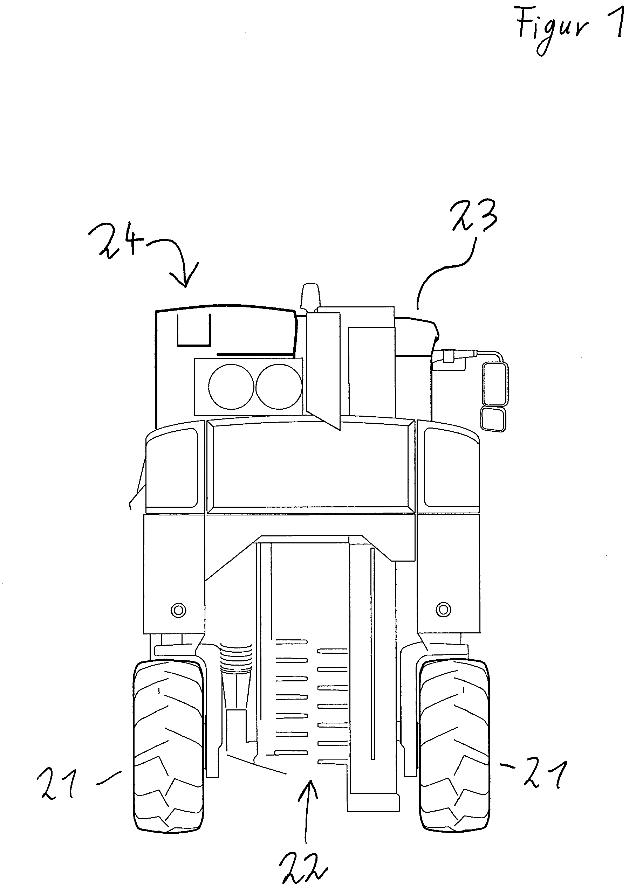

In Figur 1 ist ein Ausführungsbeispiel eines Erntefahrzeugs zum Ernten von Früchten in Ansicht von hinten dargestellt. Das Erntefahrzeug weist einen Fahrzeugrahmen auf, an welchem Räder 21 angebracht sind. Der Fahrzeugrahmen weist eine mittige Aussparung auf; er ist somit in Form auf dem Kopf stehenden U ausgebildet. Hierdurch ergibt sich ein das Fahrzeug in Längsrichtung durchdringender Zwischenraum 22, in welchem sich während des Erntevorgangs die zeilenartig angebauten Pflanzen befinden. Der Rahmen des Erntefahrzeugs übergreift somit die zeilenartig angeordneten Pflanzen während des Erntevorgangs. An der Vorderseite des Fahrzeugs ist im oberen Bereich eine Fahrerkabine 23 mit entsprechenden Steuerelementen für den Fahrer angeordnet.

Angrenzend an den Zwischenraum 22 sind seitlich an dem Fahrzeugrahmen beiderseits an sich bekannte Erntevorrichtungen angeordnet, welche beispielsweise in an sich bekannter Weise als Rüttelstäbe ausgebildet sein können. Mittels dieser Erntevorrichtungen werden die Früchte von den Pflanzen getrennt und von Fördereinrichtungen nahe des Bodens aufgenommen und in den oberen Bereich des Vollernters zur weiteren Verarbeitung gefördert.

Das Erntefahrzeug gemäß dem in Figur 1 dargestellten Ausführungsbeispiel ist als Trauben-Vollernter ausgebildet, um Trauben von zeilenartig angeordneten Weinreben zu ernten. Ebenso ist die Verwendung gleichartig ausgebildeter Erntefahrzeuge zur Ernte von beispielsweise Johannisbeeren, Jostabeeren, Wildkiwis und Intensivoliven möglich.

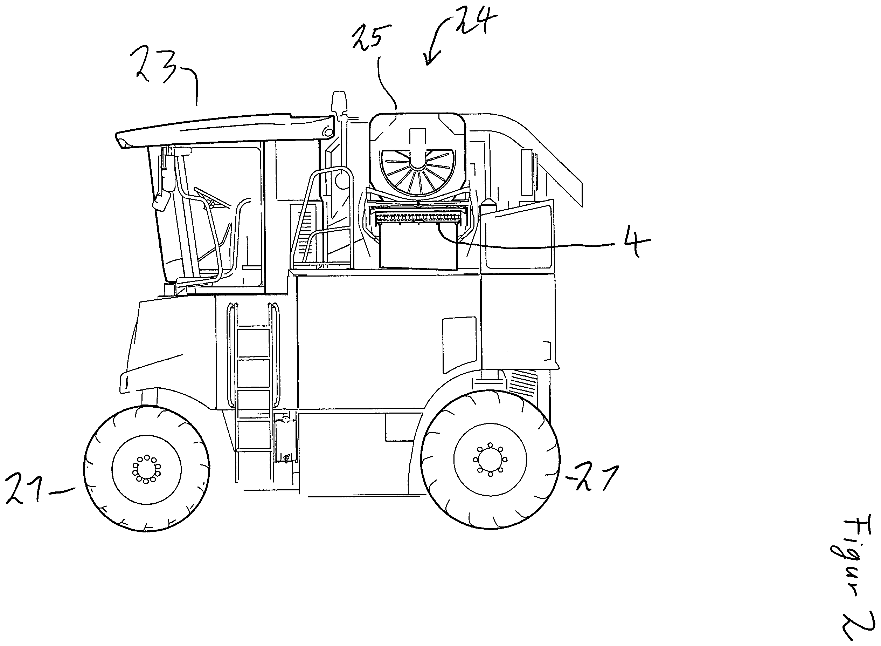

Das Erntefahrzeug weist eine Verarbeitungseinheit 24 auf, welche einen Früchte-Sortiertisch zum Separieren von Früchten und gegenüber den Früchten größeren Fremdkörpern umfasst, siehe insbesondere die Seitenansichten gemäß der Figuren 2 bis 4.

Wesentlich ist, dass der Früchte-Sortiertisch schwenkbar an dem Fahrzeugrahmen und somit schwenkbar an dem Erntefahrzeug angeordnet ist:

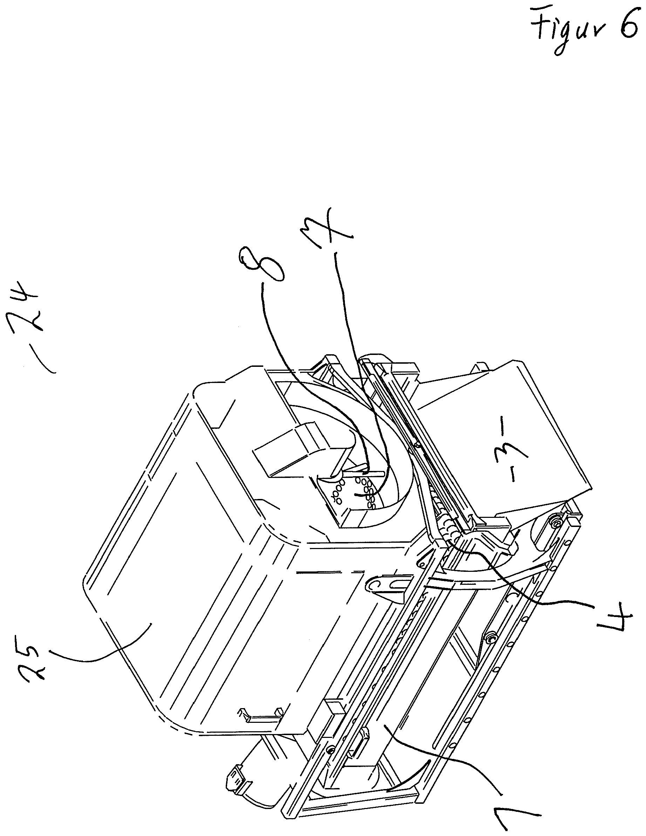

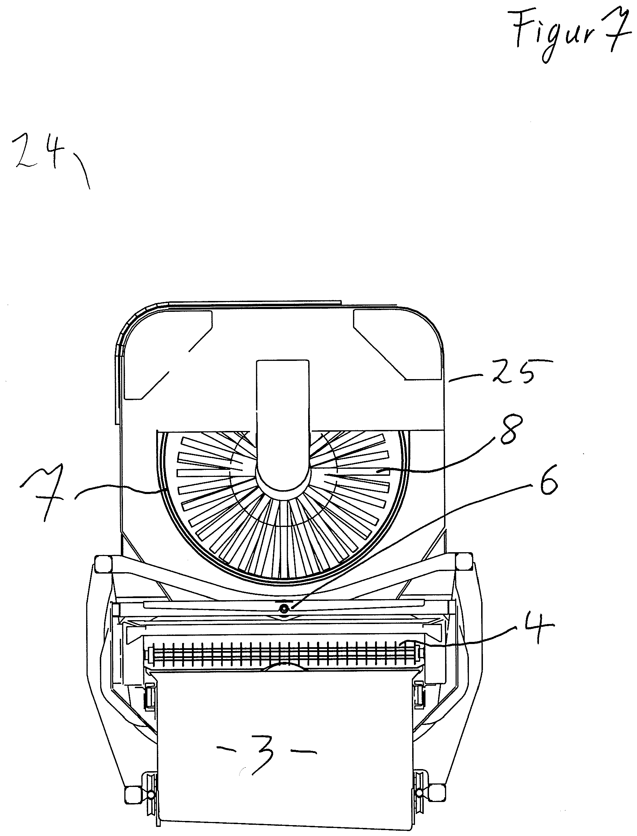

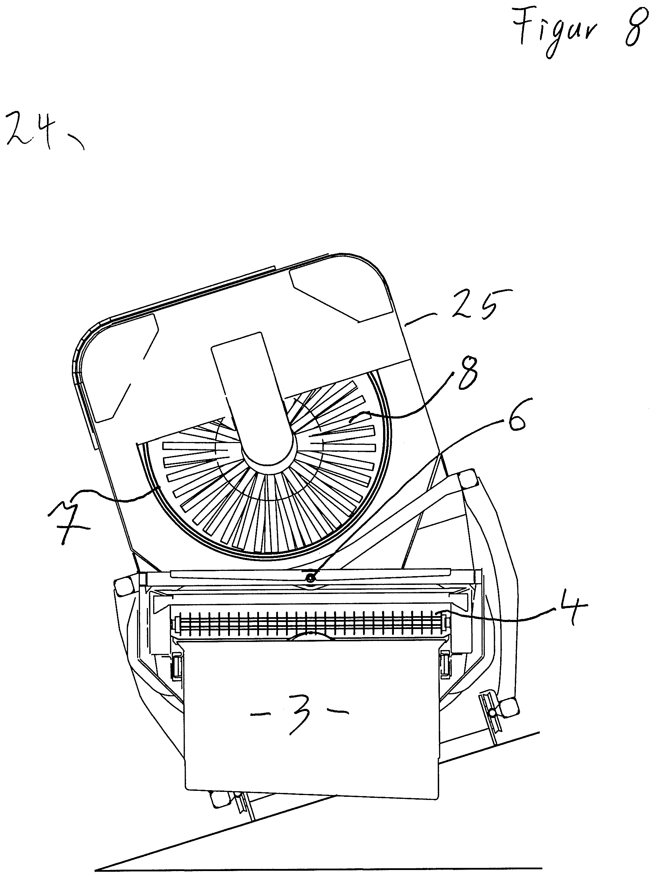

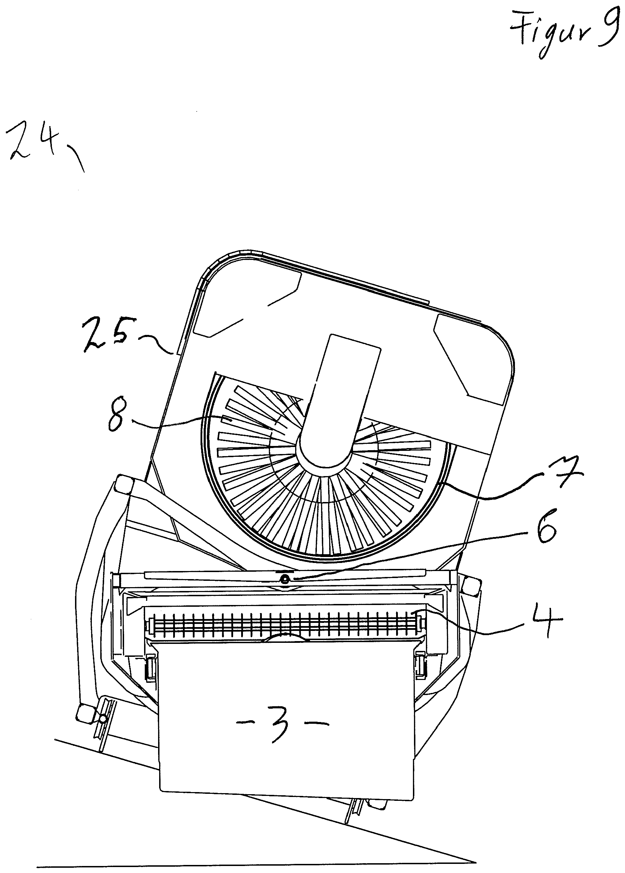

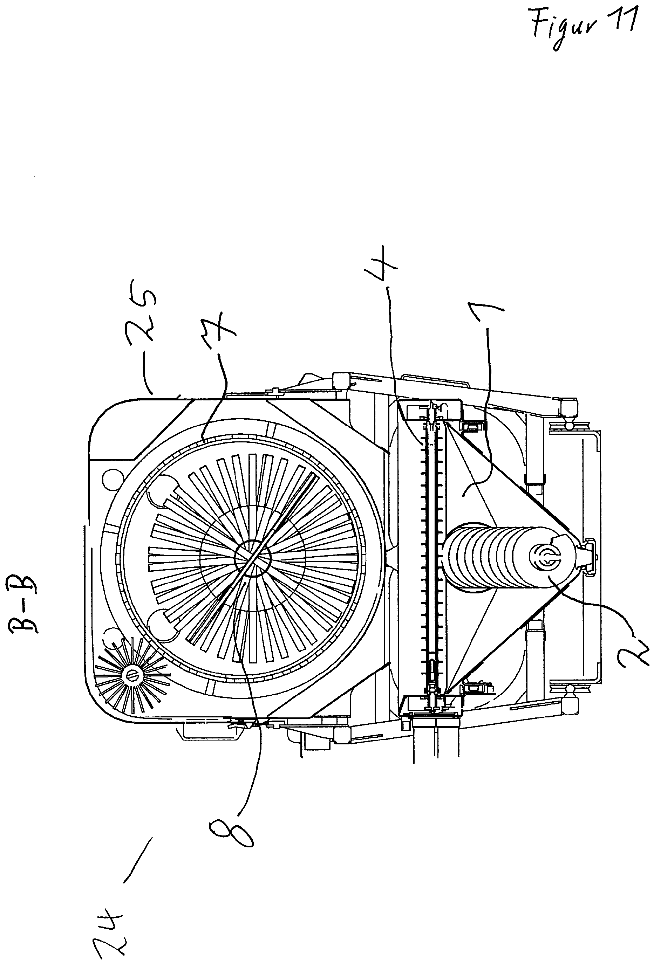

In den Figuren 6 bis 11 ist die Einheit 24 jeweils als Detailvergrößerung dargestellt, welche unter anderem einen Entrapper und den Früchte-Sortiertisch 4 umfasst. Der Früchte-Sortiertisch 4 ist in dieser Einheit schwenkbar um eine Schwenkachse 6 angeordnet. Wie beispielsweise in Figur 8 ersichtlich, führt eine Verkippung der Einheit 24 im Uhrzeigersinn zu einer entsprechenden Gegendrehung des Früchte-Sortiertisches 4, so dass der Früchte-Sortiertisch 4 waagerecht bleibt. Ebenso erfolgt, wie in Figur 9 ersichtlich, bei einem Verkippen der Einheit 24 gegen den Uhrzeigersinn eine entsprechend umgekehrte Gegendrehung des Früchtesortiertisches 4, so dass auch in diesem Fall der Früchte-Sortiertisch 4 waagerecht bleibt.

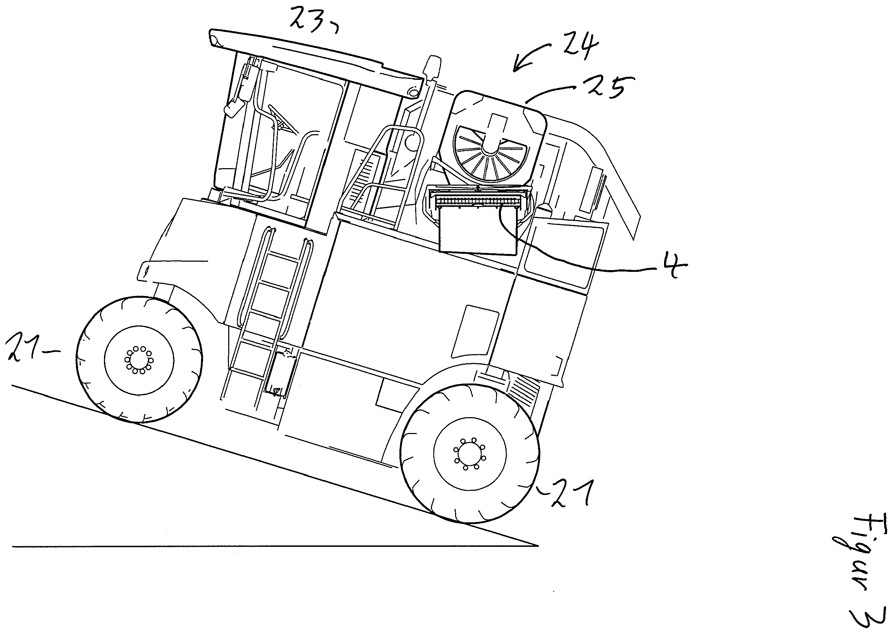

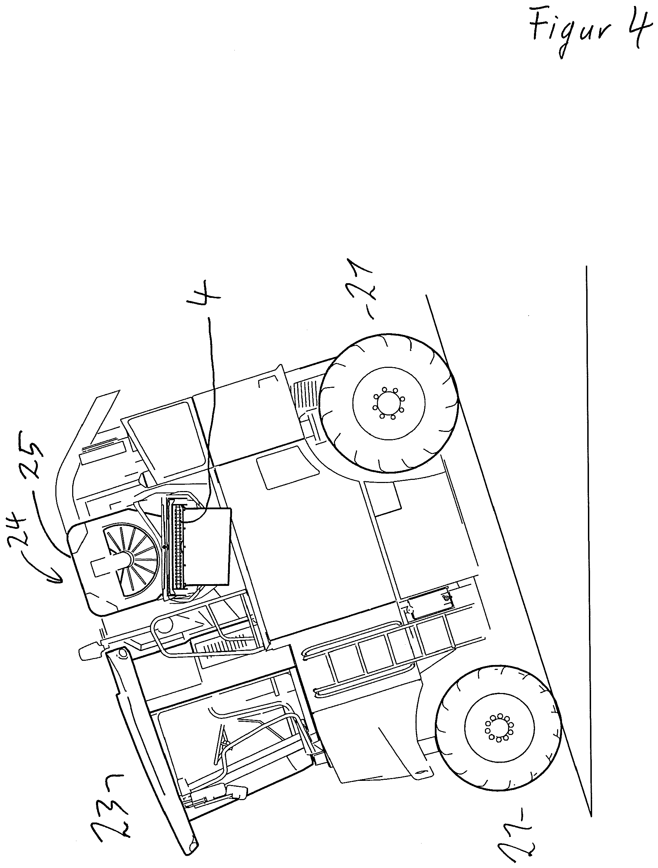

Der Zustand gemäß Figur 8 entspricht somit einer Bergabfahrt des Erntefahrzeugs, wie Sie in Figur 4 dargestellt ist. Der Zustand gemäß Figur 9 entspricht hingegen einer Bergauffahrt des Erntefahrzeugs, wie es in Figur 3 dargestellt ist.

Dadurch, dass der Früchte-Sortiertisch 4 schwenkbar zu dem Fahrzeugrahmen angeordnet ist, wird verhindert, dass sich das zu sortierende Material auf dem Früchte-Sortiertisch bei Bergauffahrt oder Bergabfahrt des Erntefahrzeugs auf einer Seite des Früchte-Sortiertisches anhäuft und somit die Sortierfunktion beeinträchtigt oder zu einem fehlerhaften Materialauswurf seitlich des Früchte-Sortiertisches führt.

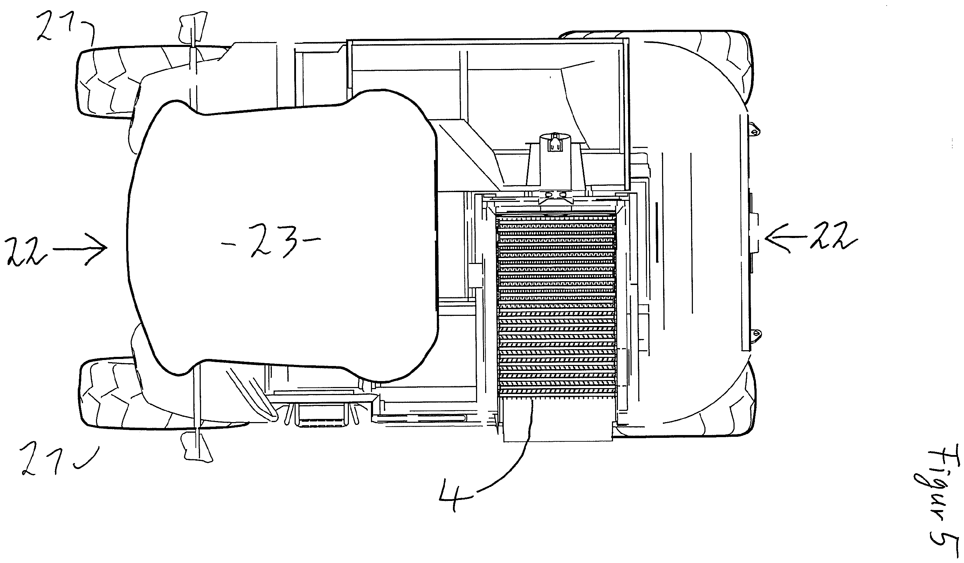

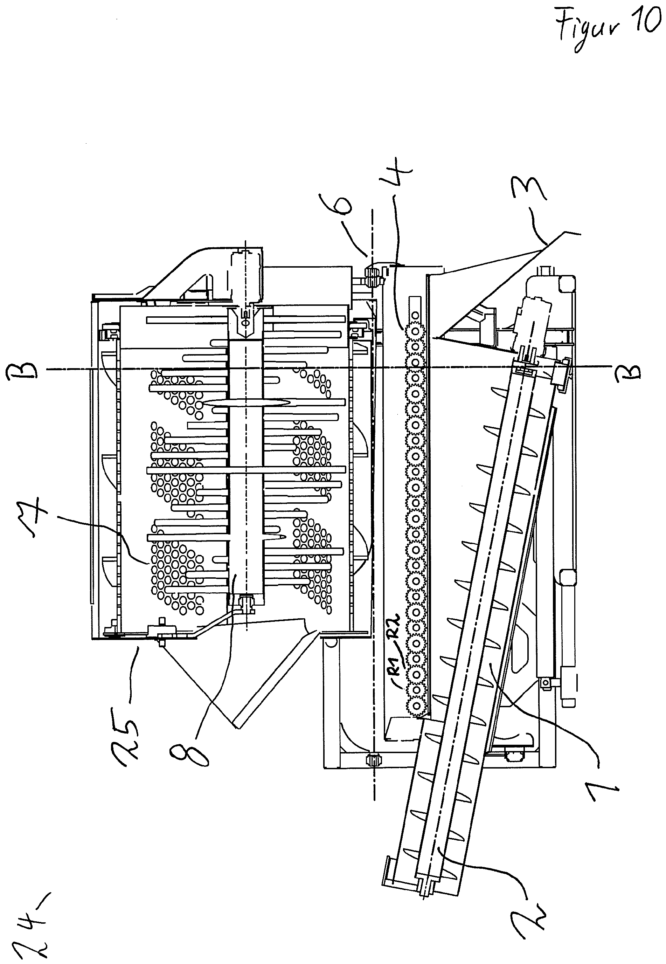

In Figur 5 wurde ein Entrapper 25 der Einheit 24 ausgespart, um eine Draufsicht auf den Rollen-Sortiertisch 4 zu ermöglichen: Wie in Figur 5 ersichtlich, ist der Früchte-Sortiertisch in diesem Ausführungsbeispiel als Rollensortiertisch mit einer Mehrzahl parallel zueinander angeordneter Rollen ausgebildet, siehe auch Figur 10 mit zwei beispielhaften bezeichneten Rollen R1 und R2. Solche an sich bekannten Sortiertische weisen Rollen mit Einbuchtungen auf, so dass durch die einander gegenüberliegenden Einbuchtungen zweier benachbarter Rollen die Größe und gegebenenfalls Form der durch die Sortierebene hindurchfallenden Elemente definiert wird. Die zu separierenden Früchte fallen somit nach unten durch die Sortierebene des Früchte-Sortiertisches hindurch, wohingegen größere Gegenstände oder längliche Gegenstände bei passender Ausrichtung in der Sortierebene durch eine gleichsinnige Drehung der Rollen zu einem Leitblech 3 gefördert werden und über das Leitblech 3 ausgeworfen werden.

Die Förderrichtung des Früchte-Sortiertisches ist somit parallel zu der Schwenkachse 6. Hierdurch wird erzielt, dass senkrecht zur Förderrichtung des Früchte-Sortiertisches 4 stets eine waagerechte (d.h. horizontale) Ausrichtung durch das Schwenken des Früchte-Sortiertisches 4 erfolgen kann.

Die Schwenkachse 6 ist mittig und oberhalb des Früchte-Sortiertisches 4 angeordnet, wie beispielsweise in den Figuren 8 und 9 ersichtlich. Der Schwerpunkt der schwenkbaren Elemente liegt somit unterhalb der Schwenkachse 6, so dass ohne die Notwendigkeit motorischer Antriebe die zuvor beschriebene waagerechte Ausrichtung des Früchte-Sortiertisches 4 sowohl bei Bergauffahrt, als auch bei Bergabfahrt des Erntefahrzeugs erfolgt.

Wie in den Seitenansichten gemäß der Figuren 1 bis 3 ersichtlich, ist die Verarbeitungseinheit 24 derart an dem Erntefahrzeug angeordnet, dass die Schwenkachse 6 und somit auch die Förderrichtung des Früchte-Sortiertisches 4 senkrecht zu einer Fahrtrichtung bei Geradeausfahrt des Erntefahrzeugs stehen. Dies ist insbesondere vorteilhaft, da in diesem Fall ein Verschwenken des Entrappers nicht notwendig ist, wie nachfolgend näher erläutert wird:
Wie beispielsweise in Figur 6 ersichtlich, ist oberhalb des Früchte-Sortiertisches 4 ein Entrapper 25 angeordnet. Der Entrapper 25 weist eine Lochtrommel 7 auf, welche drehbar in den Entrapper gelagert ist. Innerhalb der Lochtrommel ist eine ebenfalls drehbare Dornwelle 8 angeordnet. Die Dornwelle 8 weist wendelartig angeordnete Dorne auf, so dass durch eine Drehung der Dornwelle 8 relativ zu der Lochtrommel 7 die Beeren durch die Löcher der Lochtrommel 7 gedrückt werden und ein Abstreifen der Rappen mittels der Dornwelle 8 erfolgt. Die Beeren fallen durch die Lochtrommel hindurch und gelangen so zu dem Früchte-Sortiertisch 4. Aufgrund der wendelartigen Ausbildung der Dornwelle 8 werden durch die sich drehende Dornwelle die verbleibenden Pflanzenteile, insbesondere die Traubenrappen zu einem Auswurf befördert und dort seitlich an dem Erntefahrzeug ausgegeben.

Hierbei ist es für eine optimale Entrappungswirkung vorteilhaft, wenn sich Lochtrommel 7 und Dornwelle 8 gegensinnig zueinander drehen.

Die Drehachse sowohl der Lochtrommel 7, als auch der Dornwelle 8 sind somit ebenfalls senkrecht zur Fahrtrichtung des Erntefahrzeugs bei Geradeausfahrt angeordnet. Wie in den Figuren 8 und 9 ersichtlich, ist eine Neigung des Erntefahrzeugs bei Bergauffahrt oder bei Bergabfahrt für die Funktion des Entrappers somit ohne Einfluss oder zumindest mit nur einem vernachlässigbar geringen Einfluss, so dass kein Ausgleich des Entrappers durch Verschwenken erfolgen muss. In Figur 10 ist ein Längsschnitt durch die Verarbeitungseinheit 24 dargestellt, wobei die Drehachse der Lochtrommel 7 des Entrappers 25 in der Schnittebene liegt. Ebenso liegt die Schwenkachse 6 des Früchte-Sortiertisches 4 in der Schnittebene.

In dieser Schnittdarstellung gemäß Figur 10 ist insbesondere ersichtlich, dass unterhalb des Früchte-Sortiertisches 4 ein Früchte-Auffangelement angeordnet ist, welche als Früchte-Auffangwanne 1 ausgebildet ist. In der Früchte-Auffangwanne 1 ist weiterhin ein Früchte-Fördermittel 2 angeordnet, welches als Förderschnecke ausgebildet ist.

Die Beeren der Weintrauben, welche durch die Sortierebene des Früchte-Sortiertisches 4 hindurchfallen werden somit mittels der Früchte-Auffangwanne 1 dem Früchte-Fördermittel 2 zugeführt und von diesen zu einem Ausgabepunkt gefördert. Dieser Ausgabepunkt liegt in der Darstellung gemäß Figur 10 am linken Ende des Früchte-Fördermittels 2.

In Figur 10 ist somit insbesondere ersichtlich, dass der Ausgabepunkt des Früchte-Fördermittels 2 in etwa auf der Schwenkachse 6 des Früchte-Sortiertisches liegt. Die örtliche Position des Ausgabepunkts des Früchte-Fördermittels 2 ändert sich somit nur geringfügig bei Schwenken des Früchte-Sortiertisches 4.

Früchte-Auffangwanne 1 und Früchte-Fördermittel 2 sind an dem Früchte-Sortiertisch 4 angeordnet und können somit als Einheit zusammen mit diesen um die Schwenkachse 6 gedreht werden. Aufgrund des Abstands der Früchte-Auffangwanne 1 und des Früchte-Fördermittels 2 sowie weiterer zugehöriger Komponenten wie beispielsweise eines Motors zum Antrieb des Früchte-Fördermittels 2 ist ein tief liegender, von der Drehachse 6 beabstandeter Schwerpunkt der Gesamteinheit Früchte-Sortiertisch 4, Früchte-Auffangwanne 1 und Früchte-Fördermittel 2 gewährleistet, so dass wie oben beschrieben ein passives Schwenken dieser Einheit hinsichtlich einer waagerechten Ausrichtung des Früchte-Sortiertisches ohne die Notwendigkeit von motorischen Antrieben zum Schwenken erfolgt.

## Patentansprüche

1. Erntefahrzeug zur Weintraubenernte,
mit einer Ernteeinrichtung zum Abtrennen der Früchte von Pflanzen und mit einem Früchte-Sortiertisch (4) zum Separieren der Früchten von gegenüber den Früchten größeren Fremdkörpern, wobei der Früchte-Sortiertisch (4) schwenkbar an dem Erntefahrzeug angeordnet ist,
**dadurch gekennzeichnet,**
**dass** der Früchte-Sortiertisch (4) um eine parallel zur Förderrichtung liegende Schwenkachse (6) schwenkbar an dem Erntefahrzeug angeordnet ist, sodass während der Fahrt des Erntefahrzeugs beim Erntevorgang eine für die Funktionalität des Sortierens optimale Ausrichtung des Sortiertisches während des Sortiervorgangs ermöglicht wird.

2. Erntefahrzeug nach Anspruch 1,
**dadurch gekennzeichnet,**
**dass** der Früchte-Sortiertisch (4) um eine Schwenkachse (6) schwenkbar zu dem Erntefahrzeug angeordnet ist, welche Schwenkachse (6) einen Winkel im Bereich 70° bis 110°, insbesondere 80° bis 100°, bevorzugt 90° mit einer Fahrtrichtung des Erntefahrzeugs bei Geradausfahrt einschließt.

3. Erntefahrzeug nach einem der vorangegangenen Ansprüche,
**dadurch gekennzeichnet,**
**dass** die Schwenkachse (6) bei auf einer waagerechten Ebene stehendem Erntefahrzeug mit einer waagerechten Ebene einen Winkel kleiner 30°, bevorzugt kleiner 15°, insbesondere bevorzugt kleiner 5° einschließt, insbesondere, dass die Schwenkachse (6) bei auf einer waagerechten Ebene stehendem Erntefahrzeug waagerecht angeordnet ist.

4. Erntefahrzeug nach einem der vorangegangenen Ansprüche,
**dadurch gekennzeichnet,**
**dass** der Früchte-Sortiertisch (4) für ein passives Schwenken mittels Gewichtskraft ausgebildet ist.

5. Erntefahrzeug nach einem der vorangegangenen Ansprüche,
**dadurch gekennzeichnet,**
**dass** der Früchte-Sortiertisch (4) um einen über einem Schwerpunkt des Früchte-Sortiertischs (4) liegenden Schwenkpunkt oder bevorzugt um eine über einem Schwerpunkt des Früchte-Sortiertischs (4) liegenden Schwenkachse (6) schwenkbar an dem Erntefahrzeug angeordnet ist, insbesondere,
der Früchte-Sortiertisch (4) um eine über dem Früchte-Sortiertisch (4) liegende Schwenkachse (6) schwenkbar an dem Erntefahrzeug angeordnet ist.

6. Erntefahrzeug nach einem der vorangegangenen Ansprüche,
**dadurch gekennzeichnet,**
**dass** das Erntefahrzeug ein Früchte-Auffangelement (1), insbesondere eine Früchte-Auffangwanne (1), aufweist, welches an dem Früchte-Sortiertisch (4) und gemeinsam mit diesem schwenkbar an dem Erntefahrzeug angeordnet ist, um durch den Früchte-Sortiertisch (4) hindurchfallende Früchte aufzufangen,
insbesondere, dass das Früchte-Auffangelement (1) unterhalb des Früchte-Sortiertischs (4) angeordnet ist.

7. Erntefahrzeug nach Anspruch 6,
**dadurch gekennzeichnet,**
**dass** das Erntefahrzeug ein Früchte-Fördermittel (2) aufweist, um Früchte aus dem Früchte-Auffangelement (1) zu fördern, wobei das Früchte-Fördermittel (2) an dem Früchte-Auffangelement (1) und gemeinsam mit dem Früchte-Sortiertisch (4) und dem Früchte-Auffangelement (1) schwenkbar an dem Erntefahrzeug angeordnet ist.

8. Erntefahrzeug nach Anspruch 7,
**dadurch gekennzeichnet,**
**dass** das Fördermittel (2) ausgebildet ist, die Früchte aus dem Früchte-Auffangelement (1) zumindest teilweise entlang der Ausrichtung der Schwenkachse (6) zu fördern.

9. Erntefahrzeug nach Anspruch 8,
**dadurch gekennzeichnet,**
**dass** ein Ausgabepunkt des Fördermittels (2) für die geförderten Früchte im Bereich der Schwenkachse (6) liegt.

10. Erntefahrzeug nach einem der vorangegangenen Ansprüche,
**dadurch gekennzeichnet,**
**dass** das Erntefahrzeug eine Entrappeinrichtung (25) zum Abtrennen der Früchte von Pflanzenresten aufweist, wobei der Früchte-Sortiertisch (4) hinsichtlich des Transports der Früchte der Entrappeinrichtung (25) nachgeordnet ist.

11. Erntefahrzeug nach Anspruch 10,
**dadurch gekennzeichnet,**
**dass** der Früchte-Sortiertisch (4) unter der Entrappeinrichtung (25) angeordnet ist.

12. Erntefahrzeug nach einem der Ansprüche 10 bis 11,
**dadurch gekennzeichnet,**
**dass** der Früchte-Sortiertisch (4) relativ zu der Entrappeinrichtung (25) schwenkbar angeordnet ist, insbesondere, dass die Schwenkachse (6) zwischen Entrappeinrichtung (25) und Früchte-Sortiertisch (4) liegt.

13. Erntefahrzeug nach einem der Ansprüche 10 bis 12,
**dadurch gekennzeichnet,**
**dass** die Entrappeinrichtung (25) eine drehbare Lochtrommel (7) aufweist und dass die Schwenkachse (6) parallel zu einer Drehachse der Lochtrommel (7) angeordnet ist.

14. Erntefahrzeug nach einem der Ansprüche 10 bis 12,
**dadurch gekennzeichnet,**
**dass** Entrappeinrichtung (25) und Früchte-Sortiertisch (4) als Einheit ausgebildet sind, wobei diese Einheit wahlweise von dem Erntefahrzeug lösbar ausgebildet ist.

15. Erntefahrzeug nach einem der vorangegangenen Ansprüche,
**dadurch gekennzeichnet,**
**dass** der Früchte-Sortiertisch (4) als Rollensortiertisch mit mehreren parallel angeordneten Rollen ausgebildet ist, insbesondere, dass die Schwenkachse (6) senkrecht zu den Drehachsen der Rollen steht.

## Claims

1. Harvesting vehicle for grape harvesting,
having a harvesting device for removing the fruit from plants and having a fruit-sorting table (4) for separating the fruit from foreign bodies that are larger than the fruit, the fruit-sorting table (4) being pivotally arranged on the harvesting vehicle,
**characterised in that**
the fruit-sorting table (4) is arranged on the harvesting vehicle so as to be pivotable about a pivot axis (6) lying parallel to the conveying direction so that during travel of the harvesting vehicle during the harvesting operation an orientation of the sorting table that is optimum for the functionality of the sorting during the sorting operation can be provided.

2. Harvesting vehicle according to claim 1,
**characterised in that**
the fruit-sorting table (4) is arranged so as to be pivotable with respect to the harvesting vehicle about a pivot axis (6), which pivot axis (6) encloses an angle in the range of from 70° to 110°, especially from 80° to 100°, preferably 90°, with a direction of travel of the harvesting vehicle in the case of travel in a straight line.

3. Harvesting vehicle according to either one of the preceding claims,
**characterised in that**
when the harvesting vehicle is situated on a horizontal plane the pivot axis (6) encloses an angle of less than 30°, preferably less than 15°, especially preferably less than 5°, with a horizontal plane; especially, when the harvesting vehicle is situated on a horizontal plane the pivot axis (6) is arranged horizontally.

4. Harvesting vehicle according to any one of the preceding claims,
**characterised in that**
the fruit-sorting table (4) is configured for passive pivoting by means of weight force.

5. Harvesting vehicle according to any one of the preceding claims,
**characterised in that**
the fruit-sorting table (4) is arranged on the harvesting vehicle so as to be pivotable about a pivot point located above a centre of gravity of the fruit-sorting table (4) or preferably about a pivot axis (6) located above a centre of gravity of the fruit-sorting table (4); especially, the fruit-sorting table (4) is arranged on the harvesting vehicle so as to be pivotable about a pivot axis (6) located above the fruit-sorting table (4).

6. Harvesting vehicle according to any one of the preceding claims,
**characterised in that**
the harvesting vehicle has a fruit-collecting element (1), especially a fruit-collecting trough (1), which is arranged on the fruit-sorting table (4) and is pivotable together therewith on the harvesting vehicle in order to collect fruit falling through the fruit-sorting table (4); especially, the fruit-collecting element (1) is arranged under the fruit-sorting table (4).

7. Harvesting vehicle according to claim 6,
**characterised in that**
the harvesting vehicle has a fruit-conveyor means (2) for conveying fruit out of the fruit-collecting element (1), the fruit-conveyor means (2) being arranged on the fruit-collecting element (1) and being pivotable together with the fruit-sorting table (4) and the fruit-collecting element (1) on the harvesting vehicle.

8. Harvesting vehicle according to claim 7,
**characterised in that**
the conveyor means (2) is configured to convey the fruit out of the fruit-collecting element (1) at least partly along the orientation of the pivot axis (6).

9. Harvesting vehicle according to claim 8,
**characterised in that**
a delivery point of the conveyor means (2) for the conveyed fruits is located in the region of the pivot axis (6).

10. Harvesting vehicle according to any one of the preceding claims,
**characterised in that**
the harvesting vehicle has a destemming device (25) for separating the fruit from plant debris, the fruit-sorting table (4) being arranged downstream of the destemming device (25) in respect of the transport of the fruit.

11. Harvesting vehicle according to claim 10,
**characterised in that**
the fruit-sorting table (4) is arranged below the destemming device (25).

12. Harvesting vehicle according to either one of claims 10 and 11,
**characterised in that**
the fruit-sorting table (4) is arranged so as to be pivotable relative to the destemming device (25); especially, the pivot axis (6) is located between the destemming device (25) and the fruit-sorting table (4).

13. Harvesting vehicle according to any one of claims 10 to 12,
**characterised in that**
the destemming device (25) has a rotatable perforated drum (7), and the pivot axis (6) is arranged parallel to a rotational axis of the perforated drum (7).

14. Harvesting vehicle according to any one of claims 10 to 12,
**characterised in that**
the destemming device (25) and the fruit-sorting table (4) are constructed as a unit, that unit optionally being constructed so as to be detachable from the harvesting vehicle.

15. Harvesting vehicle according to any one of the preceding claims,
**characterised in that**
the fruit-sorting table (4) is in the form of a roller sorting table having a plurality of rollers arranged in parallel; especially, the pivot axis (6) is perpendicular to the rotational axes of the rollers.

## Revendications

1. Véhicule de récolte destiné aux vendanges,
comprenant un dispositif récolteur affecté à la séparation des fruits d'avec des plants, et une table (4) de triage de fruits, réalisée pour dissocier les fruits d'avec des corps étrangers de tailles supérieures à celles desdits fruits, laquelle table (4) de triage des fruits est montée pivotante sur ledit véhicule de récolte,
**caractérisé par le fait**
**que** la table (4) de triage des fruits est montée pivotante, sur le véhicule de récolte, autour d'un axe de pivotement (6) situé parallèlement à la direction de convoyage, ce qui rend possible lors du déplacement dudit véhicule de récolte, au cours de l'opération de récolte, une orientation de ladite table de triage optimale pour la fonctionnalité du triage au cours de l'opération de triage.

2. Véhicule de récolte selon la revendication 1,
**caractérisé par le fait**
**que** la table (4) de triage des fruits est montée pivotante autour d'un axe de pivotement (6) par rapport au véhicule de récolte, lequel axe de pivotement (6) décrit avec une direction de déplacement dudit véhicule de récolte, lors d'un déplacement en ligne droite, un angle situé dans la plage de 70° à 110°, en particulier de 80° à 100°, et mesurant 90° de préférence.

3. Véhicule de récolte selon l'une des revendications précédentes,
**caractérisé par le fait**
**que** l'axe de pivotement (6) décrit, avec un plan horizontal, un angle inférieur à 30°, de préférence inférieur à 15°, et inférieur à 5° avec préférence particulière, lorsque le véhicule de récolte se dresse sur un plan horizontal ; notamment par le fait que ledit axe de pivotement (6) occupe une position horizontale lorsque ledit véhicule de récolte se dresse sur un plan horizontal.

4. Véhicule de récolte selon l'une des revendications précédentes,
**caractérisé par le fait**
**que** la table (4) de triage des fruits est réalisée en vue d'un pivotement passif sous l'effet de la force proportionnelle au poids.

5. Véhicule de récolte selon l'une des revendications précédentes,
**caractérisé par le fait**
**que** la table (4) de triage des fruits est montée pivotante, sur le véhicule de récolte, autour d'un point de pivotement placé au-dessus d'un centre de gravité de ladite table (4) de triage des fruits ou, de préférence, autour d'un axe de pivotement (6) situé au-dessus d'un centre de gravité de ladite table (4) de triage des fruits,
sachant notamment que
la table (4) de triage des fruits est montée pivotante, sur ledit véhicule de récolte, autour d'un axe de pivotement (6) situé au-dessus de ladite table (4) de triage des fruits.

6. Véhicule de récolte selon l'une des revendications précédentes,
**caractérisé par le fait**
**que** ledit véhicule de récolte est pourvu d'un élément (1) collecteur de fruits, en particulier d'une auge (1) collectrice de fruits, ménagé(e) sur la table (4) de triage des fruits et monté(e) à pivotement conjoint avec cette dernière, sur ledit véhicule de récolte, de manière à recueillir des fruits chutant à travers ladite table (4) de triage des fruits ; notamment par le fait que ledit élément (1) collecteur de fruits est implanté au-dessous de ladite table (4) de triage des fruits.

7. Véhicule de récolte selon la revendication 6,
**caractérisé par le fait**
**que** ledit véhicule de récolte est doté d'un moyen (2) de convoyage de fruits, en vue de convoyer des fruits provenant de l'élément (1) collecteur de fruits, lequel moyen (2) de convoyage des fruits est implanté sur ledit élément (1) collecteur de fruits et est monté, sur ledit véhicule de récolte, à pivotement conjoint avec la table (4) de triage des fruits et avec ledit élément (1) collecteur de fruits.

8. Véhicule de récolte selon la revendication 7,
**caractérisé par le fait**
**que** le moyen de convoyage (2) est réalisé de manière à convoyer les fruits, provenant de l'élément (1) collecteur de fruits, au moins en partie le long de l'orientation de l'axe de pivotement (6).

9. Véhicule de récolte selon la revendication 8,
**caractérisé par le fait**
**qu'**un point de décharge du moyen de convoyage (2), dédié aux fruits convoyés, se trouve dans la région de l'axe de pivotement (6).

10. Véhicule de récolte selon l'une des revendications précédentes,
**caractérisé par le fait**
**que** ledit véhicule de récolte est muni d'un dispositif d'égrappage (25) réalisé pour séparer les fruits d'avec des résidus de plants, la table (4) de triage des fruits étant installée en aval dudit dispositif d'égrappage (25) par rapport à l'acheminement desdits fruits.

11. Véhicule de récolte selon la revendication 10,
**caractérisé par le fait**
**que** la table (4) de triage des fruits est implantée au-dessous du dispositif d'égrappage (25).

12. Véhicule de récolte selon l'une des revendications 10 à 11,
**caractérisé par le fait**
**que** la table (4) de triage des fruits est montée pivotante vis-à-vis du dispositif d'égrappage (25) ; notamment par le fait que l'axe de pivotement (6) se trouve entre ledit dispositif d'égrappage (25) et ladite table (4) de triage des fruits.

13. Véhicule de récolte selon l'une des revendications 10 à 12,
**caractérisé par le fait**
**que** le dispositif d'égrappage (25) est équipé d'un tambour perforé (7) rotatif ; et par le fait que l'axe de pivotement (6) occupe une position parallèle à un axe de rotation dudit tambour perforé (7).

14. Véhicule de récolte selon l'une des revendications 10 à 12,
**caractérisé par le fait**
**que** le dispositif d'égrappage (25) et la table (4) de triage des fruits sont réalisés sous la forme d'un ensemble unitaire, cet ensemble unitaire étant réalisé avec faculté de dissociation sélective d'avec le véhicule de récolte.

15. Véhicule de récolte selon l'une des revendications précédentes,
**caractérisé par le fait**
**que** la table (4) de triage des fruits est réalisée sous la forme d'une table de triage à rouleaux, comptant plusieurs rouleaux agencés parallèlement ; notamment par le fait que l'axe de pivotement (6) se dresse perpendiculairement aux axes de rotation desdits rouleaux.
